# FASCICULE DE BREVET EUROPEEN

(11) **EP 3 655 191 B1**
(45) Date de publication et mention de la délivrance du brevet: **09.03.2022**
(21) Numéro de dépôt: 18738356.7
(22) Date de dépôt: 17.07.2018
(51) Int. Cl.: B22F 10/25, B22F 12/53, B29C 64/153, B29C 64/209, B29C 64/371, B33Y 30/00, B22F 10/73

(54) **SYSTÈME ET MÉTHODE D'ALIMENTATION EN POUDRE POUR IMPRESSION 3D PAR PROJECTION DE POUDRE**
SYSTEM UND VERFAHREN ZUR PULVERZUFÜHRUNG FÜR 3D DRUCKEN DURCH PULVERÜBERTRAGUNG
SYSTEM AND METHOD OF POWDER FEEDING FOR 3D PRINTING BY POWDER PROJECTION

(30) Priorité: 17.07.2017 FR 1756756
(43) Date de publication de la demande: 27.05.2020
(73) Titulaire: AddUp, 63118 Cébazat (FR)
(72) Inventeur: CADOUX, Guillaume, 46130 Gagnac sur Cere (FR); SEBAL, Jean-Luc, 46600 Montvalent (FR)
(74) Mandataire: Barascou, Frédéric
(86) Numéro de dépôt international: PCT/EP2018/069366
(87) Numéro de publication internationale: WO 2019/016195

(56) Documents cités:
- EP-A1- 3 189 925
- WO-A1-2016/044876
- US-A1- 2002 171 183
- US-A1- 2005 133 527

## Description

L'invention concerne un système de commutation pour une installation d'impression 3D par projection d'au moins une première poudre, ainsi qu'une telle installation et un procédé mettant en œuvre un tel système.

L'invention concerne par exemple le domaine de la fabrication rapide et la réparation de pièces métalliques tridimensionnelles directement à partir d'une conception assistée par ordinateur (CAD). L'invention porte sur un système et des améliorations des procédés de distribution de matériau directement pour réaliser une forme, généralement appelé construction laser par ajout direct de matière qui permet de réaliser des pièces fonctionnelles par fusion de poudres métalliques par laser.

Les procédés de construction additive ou rechargement par projection de poudre métallique ou encore *Laser Metal Deposition* (LMD) consistent à fondre des poudres métalliques avec un laser ou autre procédé de fusion afin de générer un dépôt aux dimensions parfaitement maîtrisées. Les couches de matière sont empilées successivement pour créer des pièces techniques fonctionnelles. Cette méthode de fabrication en impression 3D peut être utilisée dans de nombreux domaines techniques allant de l'automobile à l'aéronautique.

Plus particulièrement, en LMD, les couches successives de poudre métallique sont injectées directement sous un laser qui fusionne la nouvelle couche avec la précédente. Avantageusement, cette technique se base sur une tête d'impression. La tête ou la pièce étant mobile sur au moins un axe, la poudre est donc pulvérisée exactement sous le faisceau du laser. La poudre peut posséder des caractéristiques granulométriques qui varient suivant la technologie utilisée. Actuellement, les technologies LMD permettent une économie de matière par rapport à un usinage classique, dans lequel l'enlèvement de matière peut atteindre jusqu'à 80% de la pièce finie. Etant donné le coût des métaux employés dans l'industrie, les industriels recherchent des techniques permettant de faire baisser la consommation matière. Ainsi, les acteurs de la fabrication additive tentent de réduire la quantité de poudre utilisée tout en conservant les propriétés mécaniques des pièces produites.

Actuellement, les machines d'impression 3D LMD possèdent au moins un distributeur de poudre situé généralement à l'extérieur de l'enceinte de la machine pour des raisons d'encombrement, de remplissage, et de maintenance. Le distributeur distribue en continu de la poudre via un tuyau flexible, vers la buse d'injection. La buse d'injection guide la poudre vers le faisceau du laser. La poudre est généralement acheminée dans un flux de gaz porteur, par exemple de l'argon, pour permettre son déplacement, Le débit de gaz ne varie généralement pas au cours de la fabrication.

Généralement, le débit de gaz porteur est de l'ordre de 3 litres par minute pour un tube de 4mm diamètre intérieur.

Actuellement, la distance élevée entre le distributeur et la buse induit un temps de réponse important entre le départ et l'arrivée de la poudre (environ 10 secondes pour une configuration actuelle). Ce temps de réponse est préjudiciable au développement de cette technologie, puisque le temps de réponse empêche de pouvoir arrêter le débit de poudre entre deux déplacements de la tête d'impression sans tir laser.

Une des pistes de réduction des consommations de poudre non utiles envisagée par les industriels est d'interrompre à la demande le flux de poudre vers la buse par l'intermédiaire d'une simple électrovanne. Cette technique présente l'inconvénient que les canaux de distribution de la poudre ont tendance à se boucher dès qu'ils ne sont plus ventilés. On connaît US-A-2005/133527, qui décrit une vanne directionnelle permettant d'orienter partiellement le flux de poudre vers une évacuation ou vers le laser. Cette technique ne résout pas totalement le problème du gaspillage de poudre et ne s'applique pas aux systèmes utilisant plusieurs types de poudres pour la fabrication d'une pièce multi-métaux.

La présente invention vise donc à pallier l'inconvénient précité, en proposant notamment un système de commutation pour un dispositif d'impression 3D par projection de poudre, apte à interrompre très rapidement le débit de poudre dans la buse LMD, tout en permettant le recyclage de la poudre inutilisée, et permettant le rétablissement très rapide du débit de poudre dans la buse LMD dès que le processus de fabrication le requiert.

A cet effet, l'invention a pour objet un système de commutation pour une installation d'impression 3D par projection d'au moins une première poudre, le système de commutation comprenant un corps définissant :
- au moins un premier conduit amont de gaz configuré pour recevoir un gaz,
- au moins un premier conduit amont de poudre configuré pour recevoir la première poudre,
- au moins un premier conduit aval d'évacuation pour évacuer la première poudre, et
- un conduit aval de travail configuré pour alimenter une buse destinée à déposer au moins la première poudre ,
comprenant en outre un distributeur mobile par rapport au corps, en rotation autour d'un axe, entre une position de repos, dans laquelle le premier conduit amont de poudre est fluidiquement connecté par le distributeur au premier conduit aval d'évacuation, et au moins une première position d'alimentation, dans laquelle le premier conduit amont de poudre est fluidiquement connecté par le distributeur au conduit aval de travail,
le conduit amont de poudre étant distinct du conduit amont de gaz,
et où le distributeur définit:
   - un premier canal interne adapté pour mettre le premier conduit amont de poudre en continuité fluidique avec le conduit aval de travail dans la première position d'alimentation, et
   - un deuxième canal interne adapté pour mettre le premier conduit amont de poudre en continuité fluidique avec le premier conduit aval d'évacuation dans la position de repos,
tel que:
   - dans la position d'alimentation, le premier conduit amont de gaz est connecté par le distributeur au premier conduit aval d'évacuation, par un troisième canal interne défini par le distributeur, et tel que
   - dans la position de repos, le premier conduit amont de gaz est fluidiquement connecté par le premier canal interne du distributeur au conduit aval de travail. .

Selon des modes de réalisation particuliers, le système de commutation comprend l'une ou plusieurs des caractéristiques suivantes, prise(s) isolément ou suivant toutes les combinaisons techniquement possibles :
- le corps définit en outre un deuxième conduit amont de poudre configuré pour recevoir une deuxième poudre avantageusement distincte de la première poudre et destinée à être projetée par l'installation d'impression 3D, et un deuxième conduit aval d'évacuation pour évacuer la deuxième poudre, le deuxième conduit amont de poudre étant fluidiquement connecté par le distributeur au deuxième conduit aval d'évacuation dans la première position d'alimentation, le distributeur étant en outre mobile par rapport au corps, en rotation autour de l'axe, vers une deuxième position d'alimentation, dans laquelle le deuxième conduit amont de poudre est fluidiquement connecté par le distributeur au conduit aval de travail et dans laquelle le premier conduit amont de poudre est fluidiquement connecté par le distributeur au premier conduit aval d'évacuation ;
- le distributeur définit un premier canal interne adapté pour mettre le premier conduit amont de poudre en continuité fluidique avec le conduit aval de travail dans la première position d'alimentation, et pour mettre le deuxième conduit amont de poudre en continuité fluidique avec le conduit aval de travail dans la deuxième position d'alimentation, et un deuxième canal interne adapté pour mettre le premier conduit amont de poudre en continuité fluidique avec le premier conduit aval d'évacuation dans la seconde position d'alimentation, et pour mettre le deuxième conduit amont de poudre en continuité fluidique avec le deuxième conduit aval d'évacuation dans la première position d'alimentation ;
- le corps définit en outre un deuxième conduit amont de gaz configuré pour recevoir un gaz ; dans la deuxième position d'alimentation, le deuxième conduit amont de gaz est connecté par le distributeur au premier conduit aval d'évacuation, par un troisième canal interne défini par le distributeur ;
- le corps définit : N conduits amont de poudre configurés pour recevoir N poudres avantageusement distinctes en elles et destinées à être projetées par l'installation d'impression 3D, N étant un nombre entier supérieur ou égal à 3 ; et N conduits aval d'évacuation pour évacuer respectivement les N poudres, le distributeur étant mobile par rapport au corps, en rotation autour de l'axe, entre au moins N positions d'alimentation, dans lesquelles respectivement un des N conduits amont de poudre est fluidiquement connecté par le distributeur au conduit aval de travail et dans lesquelles les autres des N conduits amont de poudre sont fluidiquement connectés par le distributeur respectivement aux conduits aval d'évacuation ; et
- le corps définit un logement recevant le distributeur, le logement étant délimité par une paroi radialement interne du corps, la paroi définissant une première rainure circulaire configurée pour former un collecteur de gaz, la paroi définissant en outre des alvéoles en communication fluidique avec la première rainure et configurés pour être en vis-à-vis des N conduits aval d'évacuation, et/ou une deuxième rainure circulaire configurée pour former un collecteur de gaz, la paroi définissant en outre des alvéoles en communication fluidique avec la deuxième rainure et configurés pour être en vis-à-vis des N conduits amont de poudre.

L'invention a pour objet, selon un autre aspect, une installation d'impression 3D par projection d'au moins une première poudre, l'installation d'impression 3D comprenant :
- un système de commutation tel que défini ci-dessus, et
- une buse destinée à déposer au moins la première poudre, la buse étant configurée pour être alimentée en la première poudre par le conduit aval de travail dans la position d'alimentation.

L'invention a également pour objet, selon un autre aspect, un procédé de commutation de poudre adapté pour être mis en œuvre dans installation d'impression 3D par projection d'au moins une première poudre, le procédé comprenant les étapes suivantes :
- fourniture d'un système de commutation,
- mise du distributeur dans la première position d'alimentation,
- réception d'un gaz par le premier conduit amont de gaz,
- réception de la première poudre dans le premier conduit amont de poudre,
- alimentation de la buse en la première poudre par le conduit aval de travail, et dépôt de la première poudre par la buse,
- mise du distributeur dans la position de repos, et
- évacuation de la première poudre par le premier conduit aval d'évacuation. Selon un mode de réalisation particulier, le procédé est tel que :
- à l'étape de fourniture du système de commutation, le corps définit une pluralité de conduits amont de poudre configurés pour recevoir une pluralité de poudres avantageusement distinctes en elles, une pluralité de conduits aval d'évacuation pour évacuer respectivement les poudres, le distributeur étant mobile par rapport au corps, de en rotation autour de l'axe, entre une pluralité de positions d'alimentation, dans lesquelles respectivement un des conduits amont de poudre est fluidiquement connecté par le distributeur au conduit aval de travail et dans lesquelles les autres des conduits amont de poudre sont fluidiquement connectés par le distributeur aux conduits aval d'évacuation,
- le procédé met en œuvre une pluralité de sources d'alimentation fournissant les poudres, et
- le distributeur est déplacé entre la pluralité de positions.

Les caractéristiques et avantages de l'invention apparaîtront à la lecture de la description qui va suivre, donnée uniquement à titre d'exemple, et non limitative, faite en référence aux dessins annexés, sur lesquels :
- la figure 1 est une représentation schématique d'une installation d'impression 3D selon l'invention,
- la figure 2 est une vue en perspective du système de commutation à deux voies représenté sur la figure 1,
- la figure 3 est une vue en coupe verticale du système de commutation représenté sur les figures 1 et 2,
- les figures 4 et 5 sont est des schémas de fonctionnement du système de commutation représenté sur les figures 1 à 3, respectivement dans deux positions du distributeur du système de commutation,
- la figure 6 est un schéma de fonctionnement d'un autre système de commutation selon l'invention mettant en œuvre trois poudres, et
- la figure 7 est une coupe verticale d'un autre système de commutation selon l'invention mettant en œuvre six poudres, et
- la figure 8 est une vue en perspective coupée pour montrer un logement interne du corps du système de commutation représenté sur la figure 7.

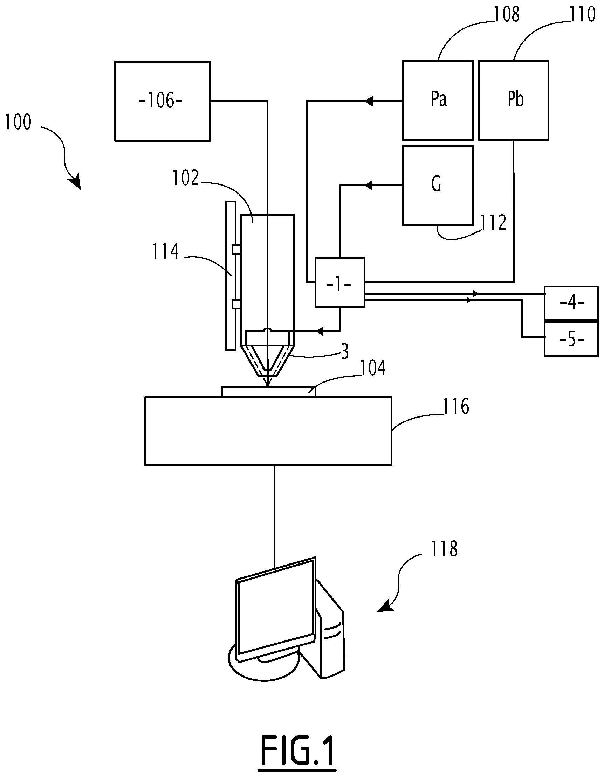

En référence à la figure 1, on décrit une installation d'impression 3D 100 selon l'invention. L'invention s'applique néanmoins à tous les secteurs impliquant le transfert de poudre quelle que soit la technologie de fabrication additive, notamment l'impression SLM

L'installation 100 comprend une tête d'impression 102 comportant une buse 3 destinée à déposer des poudre Pa, Pb pour fabriquer un objet 104, et des récupérateurs 4, 5 pour récupérer les poudres Pa, Pb. L'installation 100 comprend aussi une source laser 106, une source 108 de poudre Pa, une source 110 de poudre Pb, une source 112 de gaz, et un système de commutation 1 configuré pour commuter d'une poudre à l'autre.

L'installation 100 comprend enfin un système de déplacement 114 pour déplacer au moins verticalement la tête d'impression 112, un système de déplacement 116 adapté pour déplacer l'objet 104 dans deux directions horizontales, et un système de contrôle 118 adapté pour piloter l'installation 100.

Les poudres métalliques diverses telles que : les aciers et aciers inoxydables, ou tous les alliages métalliques, par exemple, les bases nickel, bases cobalt, alliages de titane, de cuivre ou d'aluminium, les céramiques, les composés intermétalliques, et aussi les polymères ou autres composites, peuvent être utilisées séparément ou en couches distinctes pour la fabrication de pièces complètes, la réparation de pièces usées, ou le revêtement de surface de pièces métalliques. Les procédés peuvent varier selon les caractéristiques souhaitées et l'usage de la pièce à fabriquer, de sorte que l'alimentation d'une buse de fabrication additive type LMD nécessite souvent plusieurs distributeurs de poudre distincts à connecter selon le besoin.

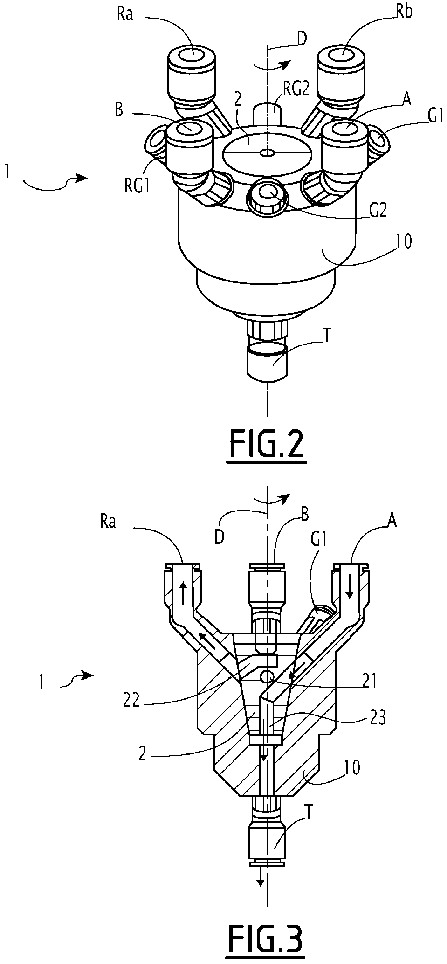

En référence aux figures 2 à 5, le système de commutation 1 comprend deux conduits ou lignes amonts A et B de poudres Pa et Pb, deux conduits aval Ra et Rb d'évacuation des poudres Pa et Pb, deux conduits amont de gaz G1 et éventuellement G2 selon la configuration du robinet, et un conduit aval de travail T connecté à la buse 3 de dépose ou de pulvérisation de poudre Pa ou Pb. Ce système de commutation 1 se positionne au plus près de la buse 3 de pulvérisation de poudre vers le laser afin de minimiser les pertes de poudre lors des changements de poudre ou du basculement d'un mode ON (en fonctionnement) vers un mode OFF (en arrêt) du débit de poudre et pour réduire le temps de réponse aux changements dans le processus de fabrication.

La figure 3 montre l'intérieur du système de commutation 1. Le système de commutation 1 comprend un corps 10 définissant les conduits amont A, B, G1, G2, les conduits aval Ra, Rb, et le conduit aval de travail T.

Selon un mode de réalisation particulier, le corps 10 définit aussi des conduits de purge RG1, RG2 (figure 2).

En vue selon un axe D du système de commutation 1, les conduits A et Ra, d'une part, et les conduits B et Rb, d'autre part, sont sensiblement diamétralement opposés l'un de l'autre. De même, les conduits G1 et RG1, d'une part, et G2 et RG2, d'autre part, sont sensiblement diamétralement opposés.

Toujours en vue selon l'axe D, les conduits amont de gaz G1 et G2 sont disposés à angle sensiblement droit, le conduit G1 étant situé angulairement à égale distance entre le conduit amont A et le conduit d'évacuation Rb, et le conduit G2 étant situé entre les conduits A et B.

Le conduit aval de travail T s'étend sensiblement dans le prolongement de l'axe D.

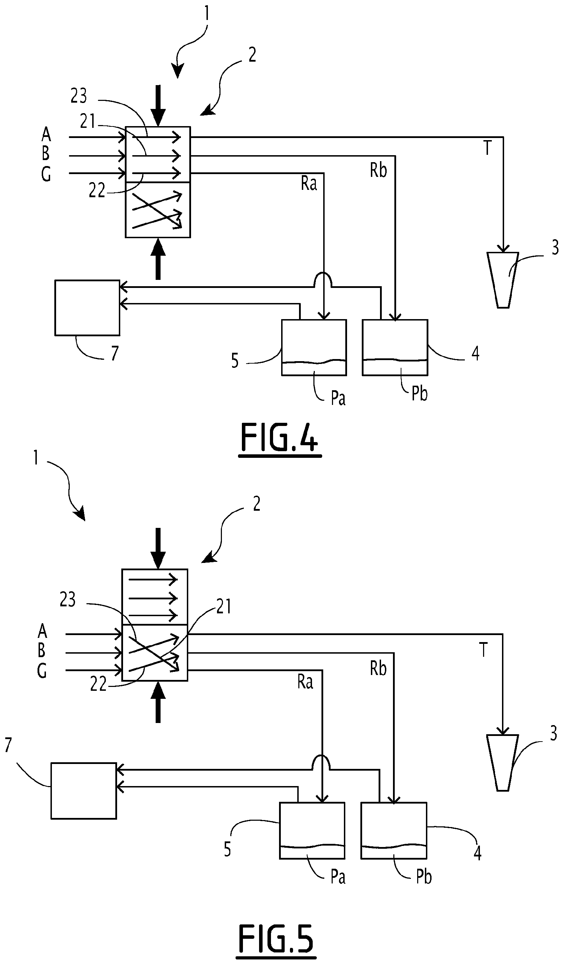

Selon l'invention, le système de commutation 1 comprend en son centre un distributeur 2 mobile par rapport au corps 10, en rotation selon un axe D, entre une première position d'alimentation, représentée sur les figures 2 à 4, une deuxième position d'alimentation, représentée sur la figure 5, et une position de repos ou de nettoyage (non représentée, mais se déduisant des précédentes par une rotation du distributeur 2).

L'axe D est ici un axe longitudinal du système de commutation 1, avantageusement vertical.

Dans cet exemple, le distributeur 2 présente une forme de douille centrale conique, mais pourrait être cylindrique ou même sphérique ou hémisphérique en variante.

Le distributeur 2 définit des canaux 21, 22 et 23 internes qui mettent en relation fluidique les conduits amont A, B, G1, G2 et les conduits aval Ra, Rb, T.

Comme visible sur la figure 3, le canal 21 va tout droit afin d'envoyer la poudre Pb directement du conduit amont B vers le conduit aval Rb pour être recyclée. Le canal 22 tourne à sensiblement 45° à l'horizontale pour obtenir un angle de 135° entre le début et la fin du canal 22. Celui-ci passe par exemple au-dessus du canal 21 pour envoyer du gaz de G1 dans la ligne à purger Ra. Le canal 23 est alimenté par le conduit A et dirige le débit de poudre Pa vers le conduit aval de travail T pour alimenter la buse 3.

Par rotation du distributeur 2 autour de l'axe D, les connexions des canaux 21, 22 et 23 avec les conduits amont et aval changent. Le canal 23 est au choix connecté au conduit amont A pour recevoir la poudre Pa, au conduit amont B pour recevoir la poudre Pb ou au conduit amont de gaz G1 pour purger le conduit aval de travail T de tout résidu de poudre. Les autres canaux 21 et 22 sont utilisés pour dévier un débit de poudre non utilisée ou pour purger un conduit aval. Le distributeur 2 est mis en rotation selon l'axe D par tout type de système mécanique, notamment vérin, moteur électrique, actionneur magnétique... etc.

La figure 4 présente un schéma de fonctionnement du distributeur 2, avec deux types de poudre et trois positions possibles du distributeur. Les positions sont prises en fonction des rotations du distributeur 2. Sur la figure 4, la position présentée est une première position d'alimentation qui permet d'utiliser la poudre Pa comme poudre de travail, car elle est envoyée directement du conduit amont A à la buse 3 par le conduit aval de travail T et le canal 23 du distributeur 2.

Le conduit B alimenté en poudre Pb est connecté au conduit aval Rb par le canal 21. La poudre Pb est récupérée dans le récupérateur 4 de poudre Pb. Le conduit amont de gaz 1 est connecté au conduit aval Ra par le canal 22 du distributeur 2. Cette connexion a l'avantage de nettoyer le conduit aval Ra par le soufflage de gaz, évitant ainsi le bourrage de ce conduit.

La poudre Pa est récupérée par le récupérateur 5 spécifique pour la poudre Pa. Une unité 7 d'aspiration et de filtration du gaz est connectée en sortie des récupérateurs 4 et 5 (figures 4 à 6).

La figure 5 présente le même système de commutation 1 dans une deuxième position d'alimentation permettant l'acheminement de la poudre Pb vers la buse 3. Le conduit amont B est relié au conduit aval de travail T par l'intermédiaire du canal 23 du distributeur 2. La poudre Pa continue à arriver par le conduit amont A mais est déviée vers le conduit aval Ra par le canal 21, afin de la recycler et conserver une circulation de poudre pour plus de réactivité lors des changements de poudre au niveau de la buse 3. Le conduit amont G1 raccordé au canal 22 nettoie le conduit aval Rb pour éviter le dépôt de poudre Pb.

Le conduit aval de travail T est alors avantageusement alimenté uniquement en gaz par le conduit amont de gaz G1 et le canal 23, ce qui a pour effet de stopper l'injection de poudre et de nettoyer le conduit aval T jusqu'à la buse 3 au moment du changement de position entre A et B.

De même, le canal 21 est parcouru par le gaz pur en provenance du conduit G1 dans une position intermédiaire, lors de la transition entre la première position d'alimentation et la deuxième position d'alimentation. Le gaz est alors évacué vers le conduit de purge RG1.

Dans une autre position intermédiaire, le gaz en provenance du conduit G2 circule dans le canal 21 et est évacué par le conduit de purge RG2.

Cette position intermédiaire du distributeur 2 intervient lors du passage de l'alimentation en poudre A à l'alimentation en poudre B. Dans ce cas, une brève coupure d'alimentation A et B se produit pendant que le canal 23 passe sur un conduit G1 ou G2, pour nettoyer le conduit aval T jusqu'à la buse 3.

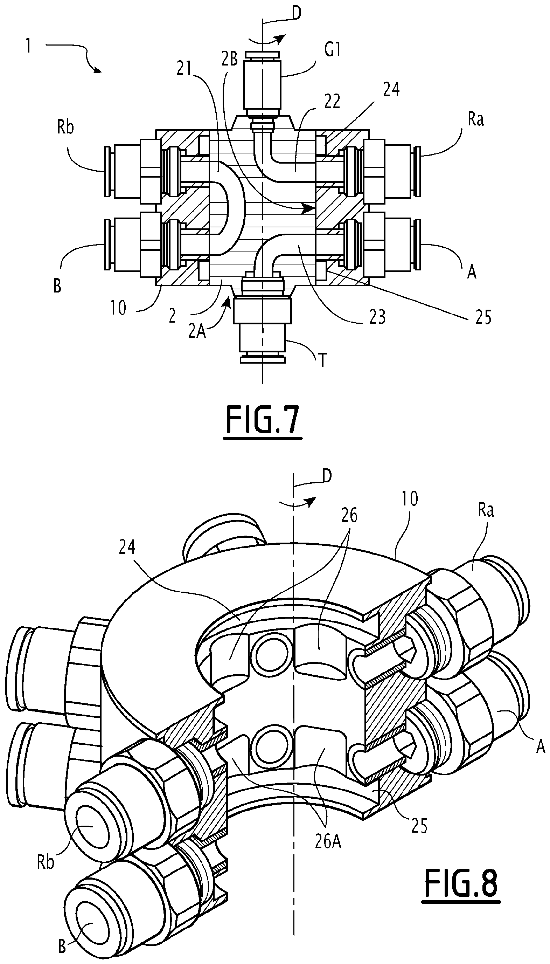

En utilisation normale, les conduits amonts A ou B ne sont activées que 15 à 20 secondes avant le besoin effectif de l'utilisation de poudre Pa ou Pb. La commutation de la poudre Pa vers la poudre Pb, et réciproquement, se fait en basculant le distributeur d'une ligne active (par exemple A) à une ligne inactive (par exemple B). Il est rare mais possible que les lignes A et B soient utilisées en même temps et qu'une commutation de A vers B immédiate soit utile. Pour les applications bi-composants, un distributeur à 3 voies est mieux adapté (voir sur les fig. 7 et 8 un exemple de distributeur à six voies).

Afin d'éviter l'usure des conduits et le gaspillage de gaz porteur, le distributeur de poudre et la circulation de gaz dans les circuits inutilisés sont activés et désactivés quelques secondes avant et après le besoin effectif d'utilisation de chaque poudre.

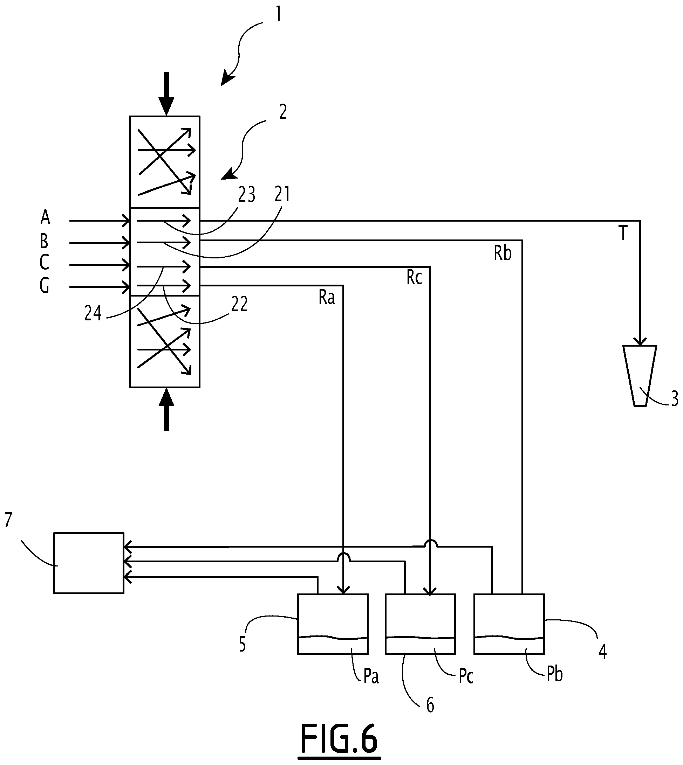

La figure 6 présente un autre schéma de fonctionnement selon un autre exemple de réalisation de l'invention avec l'utilisation de trois poudres Pa, Pb, Pc différentes. Dans cet exemple, le système de commutation 1 est analogue à celui représenté sur les figures 1 à 5. Seules les différences sont décrites ci-après.

Le système de commutation 1, dans cet exemple, connecte trois conduits amont de poudre A, B, C, un conduit d'amont de gaz G1 avec trois conduits aval d'évacuation et un conduit aval de travail T. Pour permettre cette connexion, le système de commutation 1 comprend un distributeur 2 disposant de quatre canaux 21, 22, 23, 24 de connexion. Le distributeur 2 peut prendre quatre positions différentes pour assurer le fonctionnement du système 1 et orienter la poudre adéquate vers la buse 3 au bon moment selon le plan de fabrication.

La figure 7 présente un schéma de fonctionnement selon un autre exemple de réalisation de l'invention, analogue à ceux représentés sur les figures 1 à 6. Seules les différences sont décrites ci-après.

Dans cet exemple, le système de commutation 1 comporte six lignes distinctes d'alimentation de poudre, et six lignes de recyclage.

Cet exemple montre comment un système d'alvéoles interlignes 26, 26A (Fig 8) permet d'un coté de nettoyer les canaux internes du distributeur 2 entre chaque passage d'une ligne à l'autre, grâce à un apport de gaz pur sur une rainure circulaire 24, et de l'autre de collecter les résidus de poudre qui auraient pu être piégés dans les circuits au moment du changement de ligne sur une seconde rainure circulaire 25.

Le nombre de conduits du système de commutation 1 et de canaux du distributeur 2 peut être augmenté afin d'utiliser un certain nombre de poudres différentes pour alimenter à la demande la buse 3, de façon automatique, sans modification de câblage, et sans perte de poudre.

En alimentant en gaz seulement une ligne située entre deux lignes d'alimentation en poudre, on bénéficie avantageusement d'une position « repos » qui peut être prolongée, au moment du changement de position entre les deux lignes d'alimentation ou d'une coupure de faisceau laser effectuée entre deux tirs.

Un distributeur rotatif semble le mieux adapté pour permettre l'intégration de ces conduits et canaux, mais également pour répondre au besoin de compacité du système de commutation 1. En effet, la compacité du système de commutation 1 lui permet d'être placé au plus près de la tête d'impression 3D.

Selon l'invention, le nombre de poudre utilisé n'est pas limité.

## Revendications

1. Système de commutation (1) pour une installation d'impression 3D (100) par projection d'au moins une première poudre (Pa), le système de commutation (1) comprenant un corps (10) définissant :
- au moins un premier conduit amont de gaz (G1) configuré pour recevoir un gaz,
- au moins un premier conduit amont de poudre (A) configuré pour recevoir la première poudre (Pa),
- au moins un premier conduit aval d'évacuation (Ra) pour évacuer la première poudre (Pa), et
- un conduit aval de travail (T) configuré pour alimenter une buse (3) destinée à déposer au moins la première poudre (Pa),
**caractérisé en ce qu'**il comprend en outre un distributeur (2) mobile par rapport au corps (10), en rotation autour d'un axe (D), entre une position de repos, dans laquelle le premier conduit amont de poudre (A) est fluidiquement connecté par le distributeur (2) au premier conduit aval d'évacuation (Ra), et au moins une première position d'alimentation, dans laquelle le premier conduit amont de poudre (A) est fluidiquement connecté par le distributeur (2) au conduit aval de travail (T),
le conduit amont de poudre (A) étant distinct du conduit amont de gaz (G1),
**en ce que** le distributeur (2) définit :
- un premier canal interne (23) adapté pour mettre le premier conduit amont de poudre (A) en continuité fluidique avec le conduit aval de travail (T) dans la première position d'alimentation, et
- un deuxième canal interne (21) adapté pour mettre le premier conduit amont de poudre (A) en continuité fluidique avec le premier conduit aval d'évacuation (Ra) dans la position de repos,
et **en ce que** :
- dans la position d'alimentation, le premier conduit amont de gaz (G1) est connecté par le distributeur (2) au premier conduit aval d'évacuation (Ra), par un troisième canal interne (22) défini par le distributeur (2), et
- dans la position de repos, le premier conduit amont de gaz (G1) est fluidiquement connecté par le premier canal interne (23) du distributeur (2) au conduit aval de travail (T).

2. Système de commutation (1) selon la revendication 1, **caractérisé en ce que** le corps (10) définit en outre:
- un deuxième conduit amont de poudre (B) configuré pour recevoir une deuxième poudre (Pb) avantageusement distincte de la première poudre (Pa) et destinée à être projetée par l'installation d'impression 3D (100), et
- un deuxième conduit aval d'évacuation (Rb) pour évacuer la deuxième poudre (Pb),
le deuxième conduit amont de poudre (B) étant fluidiquement connecté par le distributeur (2) au deuxième conduit aval d'évacuation (Rb) dans la première position d'alimentation,
le distributeur (2) étant en outre mobile par rapport au corps (10), en rotation autour de l'axe (D), vers une deuxième position d'alimentation, dans laquelle le deuxième conduit amont de poudre (B) est fluidiquement connecté par le distributeur (2) au conduit aval de travail (T) et dans laquelle le premier conduit amont de poudre (A) est fluidiquement connecté par le distributeur (2) au premier conduit aval d'évacuation (Ra).

3. Système de commutation (1) selon la revendication 2, **caractérisé en ce que** le distributeur (2) définit :
- un premier canal interne (23) adapté pour mettre le premier conduit amont de poudre (A) en continuité fluidique avec le conduit aval de travail (T) dans la première position d'alimentation, et pour mettre le deuxième conduit amont de poudre (B) en continuité fluidique avec le conduit aval de travail (T) dans la deuxième position d'alimentation, et
- un deuxième canal interne (21) adapté pour mettre le premier conduit amont de poudre (A) en continuité fluidique avec le premier conduit aval d'évacuation (Ra) dans la seconde position d'alimentation , et pour mettre le deuxième conduit amont de poudre (B) en continuité fluidique avec le deuxième conduit aval d'évacuation (Rb) dans la première position d'alimentation.

4. Système de commutation (1) selon la revendication 2 ou 3, **caractérisé en ce que** :
- le corps (10) définit en outre un deuxième conduit amont de gaz (G2) configuré pour recevoir un gaz,
- dans la deuxième position d'alimentation, le deuxième conduit amont de gaz (G2) est connecté par le distributeur (2) au premier conduit aval d'évacuation (Ra), par un troisième canal interne (22) défini par le distributeur (2).

5. Système de commutation (1) selon l'une quelconque des revendications 1 à 4, **caractérisé en ce que** le corps (10) définit :
- N conduits amont de poudre (A, B) configurés pour recevoir N poudres (Pa, Pb) avantageusement distinctes en elles et destinées à être projetées par l'installation d'impression 3D (100), N étant un nombre entier supérieur ou égal à 3,
- N conduits aval d'évacuation (Ra, Rb) pour évacuer respectivement les N poudres (Pa, Pb), le distributeur (2) étant mobile par rapport au corps (10), en rotation autour de l'axe (D), entre au moins N positions d'alimentation, dans lesquelles respectivement un des N conduits amont de poudre (A, B) est fluidiquement connecté par le distributeur (2) au conduit aval de travail (T) et dans lesquelles les autres des N conduits amont de poudre (A, B) sont fluidiquement connectés par le distributeur (2) respectivement aux conduits aval d'évacuation (Ra, Rb).

6. Système de commutation (1) selon la revendication 5, **caractérisé en ce que** le corps (10) définit un logement (2A) recevant le distributeur (2), le logement (2A) étant délimité par une paroi (2B) radialement interne du corps (10), la paroi (2B) définissant :
- une première rainure circulaire (24) configurée pour former un collecteur de gaz, la paroi (2B) définissant en outre des alvéoles (26) en communication fluidique avec la première rainure (24) et configurés pour être en vis-à-vis des N conduits aval d'évacuation (Ra, Rb), et/ou
- une deuxième rainure circulaire (25) configurée pour former un collecteur de gaz, la paroi (2B) définissant en outre des alvéoles (26A) en communication fluidique avec la deuxième rainure (25) et configurés pour être en vis-à-vis des N conduits amont de poudre (A, B).

7. Installation d'impression 3D (100) par projection d'au moins une première poudre (Pa), l'installation d'impression 3D (100) comprenant :
- un système de commutation (1) selon l'une quelconque des revendications 1 à 6, et
- une buse (3) destinée à déposer au moins la première poudre (Pa), la buse (3) étant configurée pour être alimentée en la première poudre (Pa) par le conduit aval de travail (T) dans la position d'alimentation.

8. Procédé de commutation de poudre, adapté pour être mis en œuvre dans une installation d'impression 3D (100) par projection d'au moins une première poudre (Pa), le procédé comprenant les étapes suivantes :
- fourniture d'un système de commutation (1) selon l'une quelconque des revendications 1 à 6,
- mise du distributeur (2) dans la première position d'alimentation,
- réception d'un gaz par le premier conduit amont de gaz (G1),
- réception de la première poudre (Pa) dans le premier conduit amont de poudre (A),
- alimentation de la buse (3) en la première poudre (Pa) par le conduit aval de travail (T), et dépôt de la première poudre (Pa) par la buse (3),
- mise du distributeur (2) dans la position de repos, et
- évacuation de la première poudre (Pa) par le premier conduit aval d'évacuation (Ra).

9. Procédé selon la revendication 8, dans lequel :
- à l'étape de fourniture du système de commutation (1), le corps (10) définit une pluralité de conduits amont de poudre (A, B) configurés pour recevoir une pluralité de poudres (Pa, Pb) avantageusement distinctes en elles, une pluralité de conduits aval d'évacuation (Ra, Rb) pour évacuer respectivement les poudres (Pa, Pb), le distributeur (2) étant mobile par rapport au corps (10), en rotation autour de l'axe (D), entre une pluralité de positions d'alimentation, dans lesquelles respectivement un des conduits amont de poudre (A, B) est fluidiquement connecté par le distributeur (2) au conduit aval de travail (T) et dans lesquelles les autres des conduits amont de poudre (A, B) sont fluidiquement connectés par le distributeur (2) aux conduits aval d'évacuation (Ra, Rb),
- le procédé met en œuvre une pluralité de sources d'alimentation (108, 110) fournissant les poudres (Pa, Pb), et
- le distributeur (2) est déplacé entre la pluralité de positions.

## Patentansprüche

1. Umschaltsystem (1) für eine Anlage zum 3D-Druck (100) durch Ausstoß wenigstens eines ersten Pulvers (Pa), wobei das Umschaltsystem (1) einen Körper (10) umfasst, der Folgendes definiert:
- wenigstens eine erste stromaufwärtige Gasleitung (G1), die dazu ausgebildet ist, ein Gas aufzunehmen,
- wenigstens eine erste stromaufwärtige Pulverleitung (A), die dazu ausgebildet ist, das erste Pulver (Pa) aufzunehmen,
- wenigstens eine erste stromabwärtige Abführleitung (Ra) zum Abführen des ersten Pulvers (Pa), und
- eine stromabwärtige Arbeitsleitung (T), die dazu ausgebildet ist, eine Düse (3) zu versorgen, die dazu bestimmt ist, wenigstens das erste Pulver (Pa) aufzubringen,
**dadurch gekennzeichnet, dass** es ferner eine Abgabevorrichtung (2) umfasst, die bezogen auf den Körper (10) um eine Achse (D) zwischen einer Ruheposition, in welcher die erste stromaufwärtige Pulverleitung (A) durch die Abgabevorrichtung (2) fluidisch mit der ersten stromabwärtigen Abführleitung (Ra) verbunden ist, und wenigstens einer ersten Versorgungsposition, in welcher die erste stromaufwärtige Pulverleitung (A) durch die Abgabevorrichtung (2) fluidisch mit der stromabwärtigen Arbeitsleitung (T) verbunden ist, drehbar ist, wobei die stromaufwärtige Pulverleitung (A) von der stromaufwärtigen Gasleitung (G1) gesondert ist, dadurch, dass die Abgabevorrichtung (2) Folgendes definiert:
- einen ersten Innenkanal (23), der geeignet ist, die erste stromaufwärtige Pulverleitung (A) in der ersten Versorgungsposition in Fluidkontinuität mit der stromabwärtigen Arbeitsleitung (T) zu bringen, und
- einen zweiten Innenkanal (21), der geeignet ist, die erste stromaufwärtige Pulverleitung (A) in der Ruheposition in Fluidkontinuität mit der ersten stromabwärtigen Abführleitung (Ra) zu bringen,
und dadurch, dass:
- in der Versorgungsposition die erste stromaufwärtige Gasleitung (G1) durch die Abgabevorrichtung (2) über einen dritten Innenkanal (22), der von der Abgabevorrichtung (2) definiert ist, mit der ersten stromabwärtigen Abführleitung (Ra) verbunden ist, und
- in der Ruheposition die erste stromaufwärtige Gasleitung (G1) über den ersten Innenkanal (23) der Abgabevorrichtung (2) fluidisch mit der stromabwärtigen Arbeitsleitung (T) verbunden ist.

2. Umschaltsystem (1) nach Anspruch 1, **dadurch gekennzeichnet, dass** der Körper (10) ferner Folgendes definiert:
- eine zweite stromaufwärtige Pulverleitung (B), die dazu ausgebildet ist, ein zweites Pulver (Pb) aufzunehmen, das sich vorteilhafterweise vom ersten Pulver (Pa) unterscheidet und dazu bestimmt ist, von der 3D-Druckanlage (100) ausgestoßen zu werden, und
- eine zweite stromabwärtige Abführleitung (Rb) zum Abführen des zweiten Pulvers (Pb),
wobei die zweite stromaufwärtige Pulverleitung (B) durch die Abgabevorrichtung (2) in der ersten Versorgungsposition fluidisch mit der zweiten stromabwärtigen Abführleitung (Rb) verbunden ist,
wobei die Abgabevorrichtung (2) ferner bezogen auf den Körper (10) um die Achse (D) zu einer zweiten Versorgungsposition drehbar ist, in welcher die zweite stromaufwärtige Pulverleitung (B) durch die Abgabevorrichtung (2) fluidisch mit der stromabwärtigen Arbeitsleitung (T) verbunden ist, und in welcher die erste stromaufwärtige Pulverleitung (A) durch die Abgabevorrichtung (2) fluidisch mit der ersten stromabwärtigen Abführleitung (Ra) verbunden ist.

3. Umschaltsystem (1) nach Anspruch 2, **dadurch gekennzeichnet, dass** die Abgabevorrichtung (2) Folgendes definiert:
- einen ersten Innenkanal (23), der geeignet ist, die erste stromaufwärtige Pulverleitung (A) in der ersten Versorgungsposition in Fluidkontinuität mit der stromabwärtigen Arbeitsleitung (T) zu bringen, und die zweite stromaufwärtige Pulverleitung (B) in der zweiten Versorgungsposition in Fluidkontinuität mit der stromabwärtigen Arbeitsleitung (T) zu bringen, und
- einen zweiten Innenkanal (21), der geeignet ist, die erste stromaufwärtige Pulverleitung (A) in der zweiten Versorgungsposition in Fluidkontinuität mit der ersten stromabwärtigen Abführleitung (Ra) zu bringen, und die zweite stromaufwärtige Pulverleitung (B) in der ersten Versorgungsposition in Fluidkontinuität mit der zweiten stromabwärtigen Abführleitung (Rb) zu bringen..

4. Umschaltsystem (1) nach Anspruch 2 oder 3, **dadurch gekennzeichnet, dass**:
- der Körper (10) ferner eine zweite stromaufwärtige Gasleitung (G2) definiert, die dazu ausgebildet ist, ein Gas aufzunehmen,
- in der zweiten Versorgungsposition die zweite stromaufwärtige Gasleitung (G2) durch die Abgabevorrichtung (2) über einen dritten Innenkanal (22), der von der Abgabevorrichtung (2) definiert ist, mit der ersten stromabwärtigen Abführleitung (Ra) verbunden ist.

5. Umschaltsystem (1) nach einem der Ansprüche 1 bis 4, **dadurch gekennzeichnet, dass** der Körper (10) Folgendes definiert:
- N stromaufwärtige Pulverleitungen (A, B), die dazu ausgebildet sind, N Pulver (Pa, Pb) aufzunehmen, die sich vorteilhafterweise voneinander unterscheiden und dazu bestimmt sind, von der 3D-Druckanlage (100) ausgestoßen zu werden, wobei N eine Ganzzahl größer oder gleich 3 ist,
- N stromabwärtige Abführleitungen (Ra, Rb) jeweils zum Abführen der N Pulver (Pa, Pb),
wobei die Abgabevorrichtung (2) bezogen auf den Körper (10) um die Achse (D) zwischen wenigstens N Versorgungspositionen drehbar ist, in welchen jeweils eine der N stromaufwärtigen Pulverleitungen (A, B) durch die Abgabevorrichtung (2) fluidisch mit der stromabwärtigen Arbeitsleitung (T) verbunden ist, und in welchen die anderen der N stromaufwärtigen Pulverleitungen (A, B) durch die Abgabevorrichtung (2) fluidisch jeweils mit den stromabwärtigen Abführleitungen (Ra, Rb) verbunden sind.

6. Umschaltsystem (1) nach Anspruch 5, **dadurch gekennzeichnet, dass** der Körper (10) eine Aufnahme (2A) definiert, die die Abgabevorrichtung (2) aufnimmt, wobei die Aufnahme (2A) von einer radial inneren Wand (2B) des Körpers (10) begrenzt ist, wobei die Wand (2B) folgendes definiert:
- eine erste kreisförmige Rille (24), die dazu ausgebildet ist, einen Gassammler zu bilden, wobei die Wand (2B) ferner Hohlkammern (26) definiert, die mit der ersten Rille (24) in Fluidverbindung stehen und dazu ausgebildet sind, sich gegenüber der N stromabwärtigen Abführleitungen (Ra, Rb) zu befinden, und/oder
- eine zweite kreisförmige Rille (25), die dazu ausgebildet ist, einen Gassammler zu bilden, wobei die Wand (2B) ferner Hohlkammern (26A) definiert, die mit der zweiten Rille (25) in Fluidverbindung stehen und dazu ausgebildet sind, sich gegenüber der N stromaufwärtigen Pulverleitungen (A, B) zu befinden.

7. Anlage zum 3D-Druck (100) durch Ausstoß wenigstens eines ersten Pulvers (Pa), wobei die Anlage zum 3D-Druck (100) Folgendes umfasst:
- ein Umschaltsystem (1) nach einem der Ansprüche 1 bis 6, und
- eine Düse (3), die dazu bestimmt ist, wenigstens das erste Pulver (Pa) aufzubringen, wobei die Düse (3) dazu ausgebildet ist, durch die stromabwärtige Arbeitsleitung (T) in der Versorgungsposition mit dem ersten Pulver (Pa) versorgt zu werden.

8. Pulverumschaltverfahren, das geeignet ist, in einer Anlage zum 3D-Druck (100) durch Ausstoß wenigstens eines ersten Pulvers (Pa) durchgeführt zu werden, wobei das Verfahren die folgenden Schritte umfasst:
- Bereitstellen eines Umschaltsystems (1) nach einem der Ansprüche 1 bis 6,
- Stellen der Abgabevorrichtung (2) in die erste Versorgungsposition,
- Aufnehmen eines Gases durch die erste stromaufwärtige Gasleitung (G1),
- Aufnehmen des ersten Pulvers (Pa) in der ersten stromaufwärtigen Pulverleitung (A),
- Versorgen der Düse (3) mit dem ersten Pulver (Pa) durch die stromabwärtige Arbeitsleitung (T) und Aufbringen des ersten Pulvers (Pa) durch die Düse (3),
- Stellen der Abgabevorrichtung (2) in die Ruheposition, und
- Abführen des ersten Pulvers (Pa) durch die erste stromabwärtige Abführleitung (Ra).

9. Verfahren nach Anspruch 8, wobei:
- beim Schritt des Bereitstellens des Umschaltsystems (1) der Körper (10) eine Mehrzahl von stromaufwärtigen Pulverleitungen (A, B), die dazu ausgebildet sind, eine Mehrzahl von Pulvern (Pa, Pb) aufzunehmen, die sich vorteilhafterweise voneinander unterscheiden, eine Mehrzahl von stromabwärtigen Abführleitungen (Ra, Rb) jeweils zum Abführen der Pulver (Pa, Pb) definiert, wobei die Abgabevorrichtung (2) bezogen auf den Körper (10) um die Achse (D) zwischen einer Mehrzahl von Versorgungspositionen drehbar ist, in welchen jeweils eine der stromaufwärtigen Pulverleitungen (A, B) durch die Abgabevorrichtung (2) fluidisch mit der stromabwärtigen Arbeitsleitung (T) verbunden ist, und in welchen die anderen der stromaufwärtigen Pulverleitungen (A, B) durch die Abgabevorrichtung (2) fluidisch mit den stromabwärtigen Abführleitungen (Ra, Rb) verbunden sind,,
- das Verfahren eine Mehrzahl von Versorgungsquellen (108, 110) verwendet, die die Pulver (Pa, Pb) bereitstellen, und
- die Abgabevorrichtung (2) zwischen der Mehrzahl von Positionen bewegt wird.

## Claims

1. A switching system (1) for a facility for 3D printing (100) by spraying at least a first powder (Pa), the switching system (1) comprising a body (10) defining:
- at least one first upstream gas conduit (G1) configured to receive a gas,
- at least one first upstream powder conduit (A) configured to receive the first powder (Pa),
- at least one first downstream discharge conduit (Ra) for discharging the first powder (Pa), and
- a downstream work conduit (T) configured in order to supply a nozzle (3) designed for depositing at least the first powder (Pa),
**characterized in that** it further comprises a distributor (2) that is movable with respect to the body (10) in rotation about an axis (D), between a rest position, in which the first upstream powder conduit (A) is fluidly connected to the first downstream discharge conduit (Ra) by the distributor (2), and at least a first supply position, in which the first upstream powder conduit (A) is fluidly connected to the downstream work conduit (T) by the distributor (2),
the upstream powder conduit (A) being different from the upstream gas conduit (G1),
**in that** the distributor (2) defines:
- a first inner channel (23) configured to place the first upstream powder conduit (A) in fluid continuity with the downstream work conduit (T) in the first supply position, and
- a second inner channel (21) configured to place the first upstream powder conduit (A) in fluid continuity with the first downstream discharge conduit (Ra) in the rest position,
and **in that**:
- in the supply position, the first upstream gas conduit (G1) is connected by the distributor (2) to the first downstream discharge conduit (Ra), by a third inner channel (22) defined by the distributor (2), and
- in the rest position, the first upstream gas conduit (G1) is fluidly connected by the first inner channel (23) of the distributor (2) to the downstream work conduit (T).

2. The switching system (1) according to claim 1, **characterized in that** the body (10) further defines:
- a second upstream powder conduit (B) configured to receive a second powder (Pb) that is advantageously different from the first powder (Pa) and configured to be sprayed by the 3D printing facility (100), and
- a second downstream discharge conduit (Rb) in order to discharge the second powder (Pb),
the second upstream powder conduit (B) being fluidly connected by the distributor (2) to the second downstream discharge conduit (Rb) in the first supply position,
the distributor (2) further being movable relative to the body (10) in rotation about the axis (D), toward a second supply position, in which the second upstream powder conduit (B) is fluidly connected by the distributor (2) to the downstream work conduit (T) and in which the first upstream powder conduit (A) is fluidly connected by the distributor (2) to the first downstream discharge conduit (Ra).

3. The switching system (1) according to claim 2, **characterized in that** the distributor (2) defines:
- a first inner channel (23) configured to place the first upstream powder conduit (A) in fluid continuity with the downstream work conduit (T) in the first supply position, and to place the second upstream powder conduit (B) in fluid continuity with the downstream work conduit (T) in the second supply position, and
- a second inner channel (21) configured to place the first upstream powder conduit (A) in fluid continuity with the first downstream discharge conduit (Ra) in the second supply position, and to place the second upstream powder conduit (B) in fluid continuity with the second downstream discharge conduit (Rb) in the first supply position.

4. The switching system (1) according to claim 2 or 3, **characterized in that**:
- the body (10) further defines a second upstream gas conduit (G2) configured to receive a gas,
- in the second supply position, the second upstream gas conduit (G2) is connected by the distributor (2) to the first downstream discharge conduit (Ra), by a third inner channel (22) defined by the distributor (2).

5. The switching system (1) according to any one of claims 1 to 4, **characterized in that** the body (10) defines:
- N upstream powder conduits (A, B) configured to receive N powders (Pa, Pb) that are advantageously distinct from each other and configured to be sprayed by the 3D printing facility (100), N being an integer greater than or equal to 3,
- N downstream discharge conduits (Ra, Rb) configured respectively to discharge the N powders (Pa, Pb),
the distributor (2) being movable relative to the body (10) by rotation around the axis (D), between at least N supply positions, in which respectively one of the N upstream powder conduits (A, B) is fluidly connected by the distributor (2) to the downstream work conduit (T) and in which the others of the N upstream powder conduits (A, B) are fluidly connected by the distributor (2) respectively to the downstream discharge conduits (Ra, Rb).

6. The switching system (1) according to claim 5, **characterized in that** the body (10) defines a housing (2A) receiving the distributor (2), the housing (2A) being delimited by a radially inner wall (2B) of the body (10), the wall (2B) defining:
- a first circular groove (24) configured to form a gas collector, the wall (2B) further defining cells (26) in fluid communication with the first groove (24) and configured to be across from the N downstream discharge conduits (Ra, Rb), and/or
- a second circular groove (25) configured to form a gas collector, the wall (2B) further defining cells (26A) in fluid communication with the second groove (25) and configured to be across from the N upstream powder conduits (A, B).

7. A facility for 3D printing (100) by spraying at least a first powder (Pa), the facility for 3D printing (100) comprising:
- a switching system (1) according to any one of claims 1 to 6, and
- a nozzle (3) designed for depositing at least the first powder (Pa), the nozzle (3) being configured to be supplied with the first powder (Pa) by the downstream work conduit (T) in the supply position.

8. A powder switching method, configured to be implemented in a facility for 3D printing (100) by spraying at least a first powder (Pa), the method comprising the following steps:
- providing a switching system (1) according to any one of claims 1 to 6,
- placing the distributor (2) in the first supply position,
- receiving a gas via the first upstream gas conduit (G1),
- receiving the first powder (Pa) in the first upstream powder conduit (A),
- supplying the nozzle (3) with the first powder (Pa) via the downstream work conduit (T), and depositing the first powder (Pa) via the nozzle (3),
- placing the distributor (2) in the rest position, and
- discharging the first powder (Pa) via the first downstream discharge conduit (Ra).

9. The method according to claim 8, wherein:
- in the step of providing the switching system (1), the body (10) defines a plurality of upstream powder conduits (A, B) configured to receive a plurality of powders (Pa, Pb) that are advantageously distinct from each other, a plurality of downstream discharge conduits (Ra, Rb) to respectively discharge the powders (Pa, Pb), the distributor (2) being movable relative to the body (10) in rotation about the axis (D), between a plurality of supply positions, in which one of the upstream powder conduits (A, B) is respectively fluidly connected by the distributor (2) to the downstream work conduit (T) and in which the others of the upstream powder conduits (A, B) are fluidly connected by the distributor (2) to the downstream discharge conduits (Ra, Rb),
- the method implements a plurality of supply sources (108, 110) supplying the powders (Pa, Pb), and
- the distributor (2) is moved between the plurality of positions.
